# EUROPÄISCHE PATENTSCHRIFT

(11) **EP 4 176 579 B1**
(45) Veröffentlichungstag und Bekanntmachung des Hinweises auf die Patenterteilung: **06.05.2026**
(21) Anmeldenummer: 21798034.1
(22) Anmeldetag: 21.10.2021
(51) Int. Cl.: H04L 67/12, H04L 67/125

(54) **VERFAHREN ZUM BETREIBEN EINES AUTOMATISIERUNGSSYSTEMS EINER MASCHINE ODER EINER ANLAGE**
METHOD FOR OPERATING AN AUTOMATION SYSTEM OF A MACHINE OR AN INSTALLATION
PROCÉDÉ DE FONCTIONNEMENT D'UN SYSTÈME D'AUTOMATISATION D'UNE MACHINE OU D'UNE INSTALLATION

(30) Priorität: 21.10.2020 DE 102020127756
(43) Veröffentlichungstag der Anmeldung: 10.05.2023
(73) Patentinhaber: Lenze SE, 31855 Aerzen (DE)
(72) Erfinder: BAUMEISTER, Christoph, 97618 Wollbach (DE); BROSCHE, Daniel, 31848 Bad Münder (DE); BORIES, Jens, 33613 Bielefeld (DE)
(74) Vertreter: Freischem & Partner Patentanwälte mbB
(86) Internationale Anmeldenummer: PCT/EP2021/079220
(87) Internationale Veröffentlichungsnummer: WO 2022/084452

(56) Entgegenhaltungen:
- WOLFGANG MAHNKE ET AL: "OPC Unified Architecture (Chapter 1 Introduction, Part of Chapter 2 Information Modeling: Concepts, Chapter 14 Conclusion and Outlook", 19 March 2009 (2009-03-19), XP002670634, ISBN: 978-3-540-68898-3, Retrieved from the Internet <URL:http://www.springerlink.com/content/k8w66880232008w8/>

## Beschreibung

Die Erfindung betrifft ein Verfahren zum Betreiben eines Automatisierungssystems einer Maschine oder einer Anlage nach dem Oberbegriff des Anspruchs 1.

Maschinen und/oder Anlagen weisen in der heutigen Zeit häufig Automatisierungssysteme auf. Diese ermöglichen es, die Maschine und/oder Anlage in die Lage zu versetzen, technische Aufgaben zu lösen, ohne dass hierfür direkte Eingriffe durch einen Bediener zur Steuerung der Anlage notwendig sind. Das Automatisierungssystem versetzt die Maschine und/oder Anlage vielmehr in die Lage, technische Aufgaben, wie beispielsweise die Bearbeitung eines Werkstücks, selbstständig oder zumindest weitgehend selbstständig zu bewältigen. Dabei ermöglichen solche Automatisierungssysteme dem Bediener typischerweise Eingriffe in den Betrieb der Maschine und/oder Anlage, um den Betriebsablauf direkt und/oder indirekt zu beeinflussen.

Unter einer direkten Beeinflussung sind hierbei insbesondere direkte Steuerungseingriffe zu verstehen, wie sie in Abwesenheit eines Automatisierungssystems typischerweise für die manuelle Steuerung der Maschine und/oder Anlage notwendig wären. Moderne Automatisierungssysteme sehen diese Möglichkeiten dennoch vor, um in bestimmten Situationen einen direkten manuellen Eingriff, beispielsweise eine Not-Aus-Funktion zu ermöglichen. Darüber hinaus ermöglichen moderne Automatisierungssysteme auch Eingriffe in den Betrieb der Maschine oder Anlage, die sich indirekt auf den Betrieb auswirken, beispielsweise in dem sie ganze Ketten von Aktionen auslösen, Ereignisse definieren, bei denen Aktionen ausgeführt werden oder Parameter für einen durch das Automatisierungssystem selbsttätig gesteuerten Betrieb vorgeben. So können beispielsweise, wenn das Automatisierungssystem eine Regelung beinhaltet, Regelungsparameter durch einen Bediener vorgegeben werden. Die eigentliche Regelung wird dann durch das Automatisierungssystem unter Verwendung dieser vorgegebenen Regelparameter durchgeführt. Auch kann beispielsweise bedienerseitig vorgegeben werden, dass das Automatisierungssystem beim Überschreiten eines bestimmten Wertes einer von einem Temperatursensor gemessenen Temperatur eine bestimmte Funktion ausführt, beispielsweise eine Warnung ausgibt, eine Leistung begrenzt oder eine Notabschaltung vornimmt.

Ermöglicht wird dies insbesondere durch Automatisierungsgeräte, die, beispielsweise mittels eines eingebetteten Computers, die Automatisierung des Betriebs der Maschine und/oder Anlage ermöglichen. Hierbei kann es sich beispielsweise um eine Steuerungseinrichtung für ein Antriebssystem, wie beispielsweise eine speicherprogrammierbare Steuerung und/oder einen Servocontroller, der der Steuerung von Servermotoren dient, handeln.

Bei einfachen Maschinen und/oder Anlagen mit niedrigem Automatisierungsgrad erfolgt der Zugriff auf derartige Automatisierungsgeräte durch den Bediener typischerweise über eine Benutzerschnittstelle des Automatisierungsgeräts. Bei dieser Benutzerschnittstelle kann es sich beispielsweise um ein Display mit einem Tastenfeld handeln, über das Befehle eingegeben und Informationen ausgegeben werden können. Aus automatisierungstechnischen Überlegungen sind derartige Lösungen jedoch nur beschränkt leistungsfähig, z.B. erfordern sie die unmittelbare Nähe des Bedieners zum Automatisierungsgerät. Auch wird das Automatisierungsgerät selbst vergleichsweise aufwändig, wenn es eine eigene Benutzerschnittstelle aufweisen muss, um die Funktion, die das Automatisierungsgerät bereitstellt, anzusprechen.

Bei höher entwickelten Automatisierungssystemen wird daher von einem Client über einen Server auf das Automatisierungsgerät zugegriffen. Bei dem Client kann es sich beispielsweise um eine Software handeln, die auf einem Computer, beispielsweise einem Prozess-Leitrechner, ausgeführt wird. Der Server kann ebenfalls mittels einer Software, die auf einem Computer ausgeführt wird, bereitgestellt werden. Bei dem Computer, der den Server bereitstellt, kann es sich beispielsweise um einen eingebetteten Computer in einer Steuerungseinrichtung eines Antriebssystems handeln. Es kann sich jedoch auch um einen Computer handeln, der über eine Datenverbindung mit dem Automatisierungsgerät verbunden ist. Derartige Automatisierungssysteme ermöglichen es insbesondere, Automatisierungsgeräte unterschiedlicher betrieblicher Herkunft in einer Maschine und/oder Anlage zu nutzen und von dem Client über den Server auf das jeweilige Automatisierungsgerät zuzugreifen. Der Server ermöglicht es hierbei, dass der Client mit dem Server über einen standardisierten und insbesondere herstellerunabhängigen Kommunikationsstandard kommuniziert. Der Server kann dann über für das Automatisierungsgerät spezifische Treiber verfügen, die es ermöglichen, über den Server auf das Automatisierungsgerät zuzugreifen. Ein solcher Kommunikationsstandard ist beispielsweise OPC (Open Platform Communication) insbesondere die OPC Unified Architecture (OPC UA) ist als Kommunikationsstandard zur Realisierung eines derartigen Automatisierungssystems geeignet. Informationen zum technischen Hintergrund hierzu finden sich in "OPC Unified Architecture", Springer-Verlag, Berlin, ISBN 978-3-540-68898-3.

In derartigen Automatisierungssystemen stellt der Server die für die Zugriffe benötigten Adressinformationen in einem Adressraum in Gestalt von Datenobjekten bereit. Die Adressinformationen ermöglichen es dem Client, über den Server auf das Automatisierungsgerät zuzugreifen, beispielsweise um eine bestimmte Aktion des Automatisierungsgeräts auszulösen und/oder oder einen technischen Parameter des Automatisierungsgeräts zu ändern. In dem Informationsmodell des Servers sind hierbei die Datenobjekte als Knoten eines vermaschten Netzwerks organisiert. Vermaschte Netzwerke besitzen gegenüber hierarchischen Strukturen einige Vorteile. So lassen sich beispielsweise reale Beziehungen besser abbilden, bestimmte Anwendungsfälle, z.B. rollenbasierte Ansichten, lassen sich leichter realisieren, das Informationsmodell lässt sich besser warten und es wird Speicherplatz eingespart.

Nachteilig ist jedoch, dass ein solches Informationsmodell, welches der Server bereitstellen muss, eine Vielzahl von Datenobjekten beinhaltet. Im Grunde müssen sämtliche Funktionen und technische Parameter des Automatisierungsgeräts durch entsprechende Datenobjekte im Informationsmodell des Servers konform zu dem Kommunikationsstandard beschrieben sein, damit der Client über den Server auf die entsprechenden Funktionen und/oder technischen Parameter des Automatisierungsgeräts zugreifen kann. Insbesondere dann, wenn der Server auf einem eingebetteten Computer einer Steuerungseinrichtung, beispielsweise einer speicherprogrammierbaren Steuerung, betrieben wird, kann dies bereits für die Hardware-Ressourcen des eingebetteten Computers eine Herausforderung darstellen. Dies liegt zum einen daran, dass derartige eingebettete Computer oftmals über sehr begrenzte Hardware-Ressourcen verfügen. Erschwerend kommt hinzu, dass beim Betrieb einer Steuerungseinrichtung häufig hohe Echtzeitanforderungen gestellt werden. Diese verlangen eine entsprechend hohe Arbeitsgeschwindigkeit auch des Servers, damit die Echtzeitanforderungen, die sich im Betrieb des Automatisierungssystems stellen, erfüllt werden können.

Hinzu kommt, dass häufig weitere Feldgeräte, wie Sensoren und/oder Aktoren, mittels eines Feldbusses mit dem Automatisierungsgerät und/oder dem Server vernetzt sind. In derartigen Fällen muss das Informationsmodell des Servers auch Datenobjekte enthalten, die Adressinformationen für die Zugriffe auf die mit dem Server und/oder dem Automatisierungsgerät vernetzten Feldgeräte enthalten. So kann der Client unter Nutzung des Kommunikationsstandards auch auf die Feldgeräte zugreifen. Der Zugriff vom Server auf das Feldgerät selbst erfolgt dann über den Feldbus mittels einer für das Feldgerät spezifischen Software-Schnittstelle. Es ist ersichtlich, dass mit jedem Feldgerät, welches mit dem Server und/oder dem Automatisierungsgerät verbunden ist, die Komplexität des Informationsmodells bzw. die Anzahl der vom Server bereitgestellten Datenobjekte und damit der Umfang des Adressraumes entsprechend zunimmt. Entsprechend steigt zusätzlich die Belastung des Computers, der den Server betreibt. Darüber hinaus ist auch die Einrichtung eines derartigen Servers für ein Automatisierungssystem mit einer entsprechenden Anzahl an Feldgeräten, die über einen Feldbus mit dem Server und/oder dem Automatisierungsgerät vernetzt sind, aufwändig. Schließlich muss der vom Server bereitgestellte Adressraum all jene Datenobjekte umfassen, die notwendig sind, um alle adressierbaren Funktionen und/oder Parameter der Feldgeräte zu beschreiben. Dies führt zu einer entsprechenden Steigerung der benötigten Hardware-Ressourcen des Computers, der den Server betreibt.

Der Erfindung liegt daher die Aufgabe zugrunde, ein Verfahren zum Betreiben eines Automatisierungssystems und ein Automatisierungssystem aufzuzeigen, bei dem die vorstehend beschriebenen Nachteile nicht oder zumindest in vermindertem Umfang auftreten, insbesondere wobei das Verfahren den Bedarf an Hardware-Ressourcen zum Betreiben des Servers vermindert.

Die Aufgabe wird gelöst durch ein Verfahren zum Betreiben eines Automatisierungssystems einer Maschine oder einer Anlage mit den Merkmalen des Anspruchs 1. Die abhängigen Ansprüche betreffen vorteilhafte Ausführungsformen.

Das Verfahren sieht vor, dass der Client in Abhängigkeit von einer auszuführenden technischen Aufgabe durch das Aufrufen einer vom Server angebotenen Funktionalität Datenobjekte auf dem Server erzeugt, die dem Client diejenigen Zugriffe auf das Automatisierungsgerät und/oder wenigstens ein über einen Feldbus mit dem Server und/oder dem Automatisierungsgerät vernetztes Feldgerät ermöglichen, die zur Lösung der technischen Aufgaben notwendig sind. Hierbei kann es sich bei der Funktionalität um einen Service, insbesondere um einen OPC UA Service handeln. Alternativ und/oder ergänzend kann es sich bei der Funktionalität um eine Methode, insbesondere um eine OPC UA Methoden, die im Informationsmodell des Servers als Knoten in dem vermaschten Netz repräsentiert ist, handeln.

Das Verfahren bietet zudem noch weitere Vorteile. So ist es beispielsweise nicht notwendig, bei einer Änderung der Maschine oder technischen Anlage ein klassisches Update des gesamten Servers durchzuführen. Es genügt vielmehr, mittels des Beschriebenen Verfahrens die benötigten Datenobjekte zu erzeugen. Dadurch ist nach dem beschriebenen Verfahren sogar möglich, Bestandteile in die Maschine oder technische Anlage zu integrieren, über die zum Zeitpunkt der Implementierung des Servers noch keine Informationen zur Verfügung standen, beispielsweise, weil diese zu diesem Zeitpunkt schlicht noch nicht existierten.

Relevant ist hierbei insbesondere, dass das Erzeugen der Datenobjekte in Abhängigkeit von einer auszuführenden technischen Aufgabe erfolgt. Bei dieser technischen Aufgabe kann es sich beispielsweise um eine Wartung oder eine Inbetriebnahme handeln. Es kann sich ebenfalls um eine technische Aufgabe aus dem Bereich des regulären Betriebs der Maschine und/oder Anlage handeln. Beispielsweise kann es sich um die, insbesondere wiederholte, Herstellung eines bestimmten Produkts oder um die Durchführung eines bestimmten, insbesondere wiederholten, Arbeitsvorgangs handeln. Es hat sich gezeigt, dass für die Durchführung einer bestimmten technischen Aufgabe mit der Maschine und/oder Anlage und/oder für deren Regelbetrieb regelmäßig nicht das vollständige Informationsmodell benötigt wird, bei dem der Adressraum Adressinformationen in Gestalt von Datenobjekten enthält, die sich auf sämtliche Funktionen und/oder Parameter des Automatisierungsgeräts und/oder mit dem Server und/oder dem Automatisierungsgerät vernetzter Feldgeräte beziehen. Es ist daher ausreichend, wenn im Adressraum lediglich diejenigen Adressinformationen in Gestalt von Datenobjekten bereitgestellt sind, die für die Bewältigung der aktuell auszuführenden technischen Aufgabe tatsächlich benötigt werden.

Der Server stellt daher vorzugsweise in dem Adressraum nicht die vollständigen Adressinformationen bereit, die das Automatisierungssystem enthalten müsste, damit der Client mittels dieser Adressinformationen auf sämtliche Funktionen und/oder technische Parameter des Automatisierungsgeräts und/oder des wenigstens einen über einen Feldbus mit dem Server und/oder dem Automatisierungsgerät vernetzten Feldgeräts zugreifen könnte. Vielmehr verfügt der Server zu Beginn der Durchführung des Verfahrens ein unvollständiges Informationsmodell, beispielsweise ein unvollständiges OPC UA Informationsmodell des Automatisierungssystems, bzw. verfügt über dieses. Insbesondere enthält das Informationsmodell des Servers zu Beginn des Verfahrens keine Adressinformationen, die sich auf Funktionen und/oder technische Parameter des Automatisierungsgeräts und/oder des wenigstens einen Feldgeräts beziehen. Stattdessen bietet der Server den Zugriff auf Funktionalitäten des Servers an, die vom Client aufgerufen werden können und es ermöglichen, die zur Lösung der technischen Aufgabe notwendigen Datenobjekte auf dem Server anzulegen. Hierbei kann es sich bei den Funktionalitäten um Services, insbesondere um OPC UA Services handeln. Alternativ und/oder ergänzend kann es sich bei den Funktionalitäten um Methoden, insbesondere um OPC UA Methoden, die im Informationsmodell des Servers als Knoten in dem vermaschten Netz repräsentiert sind, handeln.

Die Datenobjekte sind im Informationsmodell des Servers als Knoten eines vermaschten Netzes organisiert. Dies bedeutet, dass die Datenobjekte Verweise auf andere Datenobjekte, beispielsweise Referenzen eines OPC UA Informationsmodells, enthalten können. Insbesondere stellen die Datenobjekte hierbei Knoten eines vollständig vermaschten Netzes dar bzw. sind als ein solches organisiert. Derartige Datenobjekte werden daher auch als "Nodes" bezeichnet. Beispielsweise kann es sich um Datenobjekte um OPC UA Nodes handeln. Die Datenobjekte können in bestimmten Klassen, beispielsweise OPC UA Node-Klassen organisiert sein. Bei einer dieser Klassen kann es sich um eine Klasse für vom Server auszuführende Funktionalitäten handeln. Datenobjekte dieser Klasse werden beispielsweise im Falle eines OPC UA-Servers als Nodes der Klasse "Methoden" bezeichnet.

Insbesondere kann es sich bei der vom Server angebotenen Funktionalität zur Erzeugung von Datenobjekten auf dem Server um eine OPC UA Methode und/oder einen OPC UA Service, Beispielsweise den OPC UA Service "AddNodes" handeln. Eine solche Methode bzw. ein solcher Service ermöglicht es, ein Datenobjekt, insbesondere ein OPC UA Node, auf dem Server anzulegen. Bei dem mit dieser Methode erzeugten Node kann es sich insbesondere um einen Node der Klasse "Variable" handeln, der einen technischen Parameter und/oder den Wert eines technischen Parameters beschreibt.

Die Datenobjekte können Attribute beinhalten, die die Eigenschaften des Datenobjektes beschreiben. Welche Attribute ein Datenobjekt einer bestimmten Klasse enthalten kann, ist insbesondere in dem Kommunikationsstandard, über den der Client auf den Server zugreift, definiert, beispielsweise OPC UA.

Bevorzugt erhält der Client durch den Aufruf einer von dem Server angebotenen Funktionalität vom Server einen Rückgabewert mit einer Information über den Typ und/oder die Adresse des Automatisierungsgeräts. Der Aufruf dieser vom Server angebotenen Funktionalität erfolgt insbesondere bevor der Client durch das Aufrufen der entsprechenden vom Server angebotenen Funktionalität Datenobjekte auf dem Server erzeugt, die dem Client die zur Lösung der technischen Aufgabe notwendigen Zugriffe auf das wenigstens eine Feldgerät ermöglichen. Bei dieser vom Server angebotenen Funktionalität kann es sich ebenfalls um eine OPC-UA Methode und/oder einen OPC UA Service handeln.

Bevorzugt erhält der Client durch den Aufruf einer von den Server angebotenen Funktionalität vom Server einen Rückgabewert mit einer Information über den Typ und/oder die Adresse des mindestens einen Feldgeräts im Feldbus. Insbesondere erhält der Client durch den Aufruf der vom Server angebotenen Funktionalität Rückgabewerte mit Informationen über die Typen und/oder Adressen sämtlicher Feldgeräte im Feldbus. Der Aufruf dieser vom Server angebotenen Funktionalität erfolgt insbesondere bevor der Client durch das Aufrufen der entsprechenden vom Server angebotenen Funktionalität Datenobjekte auf dem Server erzeugt, die dem Client die zur Lösung der technischen Aufgabe notwendigen Zugriffe auf das wenigstens eine Feldgerät ermöglichen. Bei dieser vom Server angebotenen Funktionalität kann es sich ebenfalls um eine OPC-UA Methode handeln. So kann es sich beispielsweise um eine Methode handeln, die als OPC UA Node des Typs Methode angeboten wird und eine Referenz zu einem Datenobjekt enthält, welches die gewünschte Feldbus-Schnittstelle repräsentiert. Bei diesem Datenobjekte kann es sich beispielsweise um einen OPC UA Node der Klasse "Object" handeln. Dies führt dazu, dass die Rückgabewerte, die der Client erhält, die Informationen über den Typ und die Adresse des wenigstens einen Feldgerät im Feldbus enthalten.

Das Verfahren sieht insbesondere vor, dass der Client zum Typ des Automatisierungsgeräts und/oder des wenigstens einen Feldgeräts passende Daten aus einer Datenquelle bezieht. Die Daten beinhalten insbesondere Informationen über adressierbare technische Parameter und/oder technische Funktionen des Automatisierungsgeräts und/oder des Feldgeräts. Dies erfolgt insbesondere, nachdem der Client durch den Aufruf der entsprechenden vom Server angebotenen Funktionalität Informationen über das Automatisierungsgerät und/oder über den Typ und/oder die Adresse des wenigstens einen Feldgeräts erhalten hat. Insbesondere erfolgt das Beziehen der Daten aus der Datenquelle, bevor der Client durch das Aufrufen der entsprechenden vom Server angebotenen Funktionalität Datenobjekte auf dem Server erzeugt.

Bei der Datenquelle kann es sich um eine interne Ressource des Computers, auf dem der Client betrieben wird, handeln. Alternativ und/oder ergänzend ist es auch möglich, dass der Client mittels einer Datenverbindung, beispielsweise über das Internet, auf eine von dem Computer, auf dem der Client betrieben wird, entfernte Datenquelle zugreift. Auf diese Weise ist es möglich, dass der Client auf eine praktisch unbegrenzte Menge von Daten zu einer ebenfalls praktisch unbegrenzten Menge von Automatisierungsgeräten und/oder Feldgeräten zugreifen und diese Daten beziehen kann. Darüber hinaus können diese Daten in einfacher Weise in aktualisierter Version zur Verfügung gestellt werden, ohne dass Daten, die über eine interne Ressource des Computers zur Verfügung gestellt werden, regelmäßig aktualisiert werden müssen.

In vielen Fällen besteht für den Client jedoch nicht die Möglichkeit, die Informationen über Typ und/oder Adresse eines angeschlossenen Feldgerätes durch den Aufruf einer vom Server angebotenen Funktionalität, insbesondere wie vorstehend, zu beziehen. Insbesondere für derartige Fälle kann das vorliegende Verfahren vorsehen, dass der Client den Typ und/oder die Adresse des Feldgeräts mittels eines iterativen Verfahrens ermittelt.

Dabei sieht dieses iterative Verfahren insbesondere vor, dass durch den Client Datenobjekte auf dem Server erzeugt werden, die zur Ermöglichung eines Zugriffs auf ein Feldgerät wenigstens eines bestimmten Typs geeignet sind. Der Client kann dann durch das testweise Aufrufen der Datenobjekte überprüfen, ob es sich bei dem wenigstens einen Feldgerät um ein Feldgerät des wenigstens einen Typs handelt. Dabei handelt es sich bei den Datenobjekten insbesondere um Datenobjekte, die bei ihrem Aufruf durch den Client einen Lesezugriff auf das Feldgerät bewirken. Insbesondere handelt es sich um Datenobjekte, die bei ihrem Aufruf durch den Client einen Lesezugriff auf Geräteinformationen des Feldgeräts, die insbesondere den Typ des Feldgeräts betreffen, bewirken. Das Verfahren sieht nun insbesondere vor, dass der Client den Rückgabewert, den er auf den Aufruf hin erhält, analysiert und in Abhängigkeit des Ergebnisses der Analyse den Typ des Feldgeräts identifiziert oder zumindest auf eine bestimmte Menge möglicher Typen einschränkt.

Insbesondere im Fall eines Ergebnisses der Überprüfung, das keine eindeutige Identifizierung oder zumindest hinreichende Einschränkung des Typs des Feldgeräts ermöglicht, kann das Verfahren vorsehen, dass der Client die Datenobjekte entfernt und durch andere Datenobjekte ersetzt, die zur Ermöglichung eines Zugriffs auf ein Feldgerät wenigstens eines weiteren bestimmten Typs geeignet sind und die Überprüfung wiederholt. Dies kann insbesondere derart oft wiederholt werden, bis eine eindeutige Identifizierung des Typs des Feldgeräts ermöglicht oder der mögliche Typ des Feldgeräts hinreichend eingeschränkt ist. Unter einer hinreichenden Einschränkung ist insbesondere eine Einschränkung zu verstehen, die die Menge der möglichen Typen des Feldgeräts soweit beschränkt, dass eine weitergehende Unterscheidung für die Durchführung des weiteren Verfahrens und insbesondere die Lösung der technischen Aufgabe nicht notwendig ist.

Es kann alternativ und/oder ergänzend sein, dass das vorliegende Verfahren vorsieht, dass der Client den Typ des Feldbusses mittels eines iterativen Verfahrens ermittelt. Dies ist insbesondere dann vorteilhaft, wenn der Server nicht die Möglichkeit bietet, die Informationen über den Typ des Feldbusses durch den Aufruf einer vom Server angebotenen Funktionalität zu beziehen.

Dabei sieht dieses iterative Verfahren insbesondere vor, dass durch den Client Datenobjekte auf dem Server erzeugt werden, die zur Ermöglichung eines Zugriffs auf ein Automatisierungsgerät mit Anbindung an einen Feldbus eines bestimmten Typs und/oder ein Feldgerät über einen Feldbus des wenigstens einen bestimmten Typs geeignet sind. Der Client kann dann durch das testweise Aufrufen der Datenobjekte überprüfen, ob es sich bei dem wenigstens einen Feldbus um einen Feldbus des wenigstens einen Typs handelt. Dabei handelt es sich bei den Datenobjekten insbesondere um Datenobjekte, die bei ihrem Aufruf durch den Client einen Lesezugriff auf das Automatisierungsgerät und/oder einen Lesezugriff auf ein Feldgerät über den Feldbus bewirken. Insbesondere handelt es sich um Datenobjekte, die bei ihrem Aufruf durch den Client einen Lesezugriff auf Geräteinformationen des Automatisierungsgeräts und/oder des Feldgeräts, die insbesondere den Typ des Feldbusses betreffen, bewirken. Das Verfahren sieht nun insbesondere vor, dass der Client den Rückgabewert, den er auf den Aufruf hin erhält, analysiert und in Abhängigkeit des Ergebnisses der Analyse den Typ des Feldbusses identifiziert oder zumindest auf eine bestimmte Menge möglicher Typen einschränkt.

Insbesondere im Fall eines Ergebnisses der Überprüfung, das keine eindeutige Identifizierung oder zumindest hinreichende Einschränkung des Typs des Feldbusses ermöglicht, kann das Verfahren vorsehen, dass der Client die Datenobjekte entfernt und durch andere Datenobjekte ersetzt, die zur Ermöglichung eines Zugriffs auf ein Automatisierungsgerät mit Anbindung an einen Feldbus wenigstens eines weiteren bestimmten Typs und/oder auf ein Feldgerät über einen Feldbus des wenigstens einen weiteren bestimmten Typs geeignet sind und die Überprüfung wiederholt. Dies kann insbesondere derart oft wiederholt werden, bis eine eindeutige Identifizierung des Typs des Feldbusses ermöglicht oder der mögliche Typ des Feldbusses hinreichend eingeschränkt ist. Unter einer hinreichenden Einschränkung ist insbesondere eine Einschränkung zu verstehen, die die Menge der möglichen Typen des Feldbusses soweit beschränkt, dass eine weitergehende Unterscheidung für die Durchführung des weiteren Verfahrens und insbesondere die Lösung der technischen Aufgabe nicht notwendig ist.

Es kann alternativ und/oder ergänzend sein, das das vorliegende Verfahren vorsieht, dass der Client die Version einer Firmware des wenigstens einen Feldgeräts mittels eines iterativen Verfahrens ermittelt. Dies ist insbesondere dann vorteilhaft, wenn der Server nicht die Möglichkeit bietet, die Informationen über den Typ der Firmware durch den Aufruf einer vom Server angebotenen Funktionalität zu beziehen.

Dabei sieht dieses iterative Verfahren insbesondere vor, dass durch den Client Datenobjekte auf dem Server erzeugt werden, die zur Ermöglichung eines Zugriffs auf ein Feldgerät mit einer Firmware wenigstens einer bestimmten Version geeignet sind. Der Client kann dann durch das testweise Aufrufen der Datenobjekte überprüfen, ob es sich bei der Firmware des wenigstens einen Feldgeräts um eine Firmware der wenigstens einen Version handelt. Dabei handelt es sich bei den Datenobjekten insbesondere um Datenobjekte, die bei ihrem Aufruf durch den Client einen Lesezugriff auf das Feldgerät bewirken. Insbesondere handelt es sich um Datenobjekte, die bei ihrem Aufruf durch den Client einen Lesezugriff auf Geräteinformationen des Feldgeräts, die insbesondere die Version der Firmware betreffen, bewirken. Das Verfahren sieht nun insbesondere vor, dass der Client den Rückgabewert, den er auf den Aufruf hin erhält, analysiert und in Abhängigkeit des Ergebnisses der Analyse die Version der Firmware identifiziert oder zumindest auf eine bestimmte Menge möglicher Typen einschränkt.

Insbesondere im Fall eines Ergebnisses der Überprüfung, das keine eindeutige Identifizierung oder zumindest hinreichende Einschränkung der Version der Firmware ermöglicht, kann das Verfahren vorsehen, dass der Client die Datenobjekte entfernt und durch andere Datenobjekte ersetzt, die zur Ermöglichung eines Zugriffs auf ein Feldgerät mit einer Firmware wenigstens einer weiteren bestimmten Version geeignet sind und die Überprüfung wiederholt. Dies kann insbesondere derart oft wiederholt werden, bis eine eindeutige Identifizierung der Version der Firmware ermöglicht oder die mögliche Version der Firmware hinreichend eingeschränkt ist. Unter einer hinreichenden Einschränkung ist insbesondere eine Einschränkung zu verstehen, die die Menge der möglichen Versionen der Firmware soweit beschränkt, dass eine weitergehende Unterscheidung für die Durchführung des weiteren Verfahrens und insbesondere die Lösung der technischen Aufgabe nicht notwendig ist.

Der Client kann insbesondere für die automatisierte Durchführung der vorstehend beschriebenen iterativen Verfahren eingerichtet sein. Dabei können die vorstehend beschriebenen iterativen Verfahren vorsehen, dass der Client auf vordefinierte Entscheidungsbäume zurückgreift, die Informationen darüber enthalten, welche Datenobjekte in Abhängigkeit von dem Ergebnis der Überprüfung im vorangegangenen Überprüfungsschritt, insbesondere dem Ergebnis der Analyse des entsprechenden Rückgabewerts, zum Zwecke der Weiterführung des iterativen Verfahrens auf dem Server zu erzeugen sind.

Durch eine derartige "Trial & Error"-Methode kann der Client auch in dem Fall, dass der Server keine entsprechenden Funktionalitäten hierfür bereitstellt, herausfinden, um welche Art Feldgerät, Feldbus und/oder Version einer Firmware es sich handelt. Das Verfahren wird hiermit auch auf Automatisierungssysteme anwendbar, die die entsprechenden Funktionalitäten zu Identifikation des Typs des Feldgeräts, des Feldbusses und/oder der Version der Firmware nicht bieten.

Die bezogenen Daten versetzen den Client in die Lage, die geeigneten Datenobjekte mittels der vom Server angebotenen Funktionalität zu erstellen. Insbesondere enthalten die Daten Informationen, die den Client in die Lage versetzen, beim Aufruf der Funktionalität des Servers zum Erzeugen der Datenobjekte automatisiert die notwendigen Parameter zu übergeben, die die vom Server angebotene Funktionalität benötigt, um die Datenobjekte im Adressraum des Servers anzulegen. Bei den übergebenen Parametern kann es sich beispielsweise um eine Identifikation der Schnittstelle des Feldbusses und/oder eine Parameterschnittstelle des Automatisierungsgeräts selbst handeln. Weiterhin kann es sich um die Adresse des technischen Parameters in der jeweiligen Schnittstelle, dessen Index, Subindex und/oder Datentyp handeln.

Die Übergabe dieser Parameter ermöglicht es beispielsweise, dass ein OPC UA Node des Typs "Variable" im Adressraum des Servers angelegt wird, der den technischen Parameter und/oder die technische Funktion, auf den ein Zugriff erfolgen soll, repräsentiert und der Referenzen zu anderen OPC UA Nodes und Attribute enthält, die es dem Client ermöglichen, durch einen Zugriff auf den angelegten OPC UA Node der Klasse "Variable" auf den repräsentierten technischen Parameter und/oder die technische Funktion des Automatisierungsgeräts und/oder Feldgeräts zuzugreifen. Insbesondere wird die Weiterleitung des Zugriffs des Clients an die betroffenen technischen Ressourcen des Automatisierungsgeräts und/oder des Feldgeräts ermöglicht.

Der Client ist insbesondere dazu eingerichtet, die bezogenen Daten automatisiert im Hinblick auf die beim Aufruf der Funktionalität des Servers zur Erzeugung der Datenobjekte zu übergebenden Parameter automatisiert auszuwerten. Dies ermöglicht es, dass Erzeugen der Datenobjekte auf dem Server durch den Client weitgehend zu automatisieren, sodass im Idealfall keine tiefgreifenden Kenntnisse der Bestandteile des Automatisierungssystems seitens des Bedieners des Clients von Nöten sind.

Insbesondere erfolgt durch den Client eine Ermittlung und/oder Auswahl der zu erzeugenden Datenobjekte in Abhängigkeit von der technischen Aufgabe, von den bezogenen Daten und/oder von einer Nutzereingabe.

Der Client ist hierbei dazu eingerichtet, in Abhängigkeit der technischen Aufgabe automatisiert diejenigen Datenobjekte zu ermitteln und/oder auszuwählen, die auf dem Server erzeugt werden müssen, um die technische Aufgabe zu lösen. Hierfür greift der Client auf Daten, welche Informationen über vordefinierte technische Aufgaben enthalten, zurück. Bei den Definitionen über vordefinierte technische Aufgaben handelt es sich um Informationen über diejenigen technischen Parameter und/oder technischen Funktionen der Maschine und/oder Anlage h, auf die zur Lösung der technischen Aufgabe zugegriffen werden muss. So kann es beispielsweise notwendig sein, zur Lösung einer bestimmten Aufgabe während des Betriebs der Maschine und/oder Anlage eine bestimmte Temperatur zu überwachen. Die Daten, die Informationen betreffend technische Aufgabe enthalten würden dann die Information enthalten, dass diese Temperatur zu überwachen ist. Der Client wird durch die Information in die Lage versetzt, die Datenobjekte, die notwendig sind, auf diese Temperatur zuzugreifen zu identifizieren und insbesondere unter Hinzuziehung der bezogenen Daten mit Informationen über adressierbare technische Parameter und/oder technische Funktionen des Automatisierungsgeräts und/oder des Feldgeräts die notwendigen Datenobjekte auf dem Server zu erzeugen. Dabei kann das Verfahren vorsehen, dass Nutzereingaben erfolgen, beispielsweise um aus einer Reihe von einem Nutzer zur Auswahl gestellten technischen Aufgaben, die auszuführende auszuwählen.

Es versteht sich, dass die Daten, die Informationen über vordefinierte technische Aufgaben enthalten, von einer internen Ressource des Computers, auf dem der Client betrieben wird, und/oder mittels einer Datenverbindung, beispielsweise über das Internet, von einer von dem Computer, auf dem der Client betrieben wird, entfernten Datenquelle bezogen werden können. **In** diesem Zusammenhang kann der Bezug der Daten mit den Informationen über die vordefinierte technische Aufgabe ebenfalls mittels einer Nutzereingabe gesteuert und/oder ausgelöst werden, beispielsweise indem eine Abfrage erfolgt, ob Daten betreffend die technische Aufgabe von einer Datenquelle bezogen werden sollen.

Insbesondere kann es sich bei wenigstens einem der Zugriffe, die dem Client durch die erzeugten Datenobjekte auf das Automatisierungsgerät und/oder das Feldgerät ermöglicht werden, um das Auslesen und/oder Schreiben eines technischen Parameters und/oder des Wertes eines technischen Parameters eines Bestandteils der Maschine und/oder Anlage handeln.

Bei den Zugriffen, die typischerweise mittels des Clients über die erzeugten Datenobjekte auf das Automatisierungsgerät und/oder das Feldgerät vorgenommen werden müssen, handelt es sich häufig um das Auslesen und/oder Schreiben eines technischen Parameters eines Bestandteils der Maschine und/oder Anlage. Hierbei kann es sich beispielsweise um einer Temperatur handeln, die nicht überschritten werden darf, und daher in ein Feldgerät, das der Überwachung einer Temperatur dient, geschrieben wird. Das Feldgerät wird so in die Lage versetzt, beim Überschreiten dieser Temperatur eine entsprechende Funktion auszuführen, beispielsweise einen Alarm auszulösen. Ebenfalls kann es sich jedoch auch um eine Ist-Temperatur handeln, die - beispielsweise zu Diagnosezwecken - ausgelesen werden soll. Der Client kann so beispielsweise in die Lage versetzt werden, aus einem Feldgerät eine von diesem Feldgerät gemessenen Temperatur auszulesen. Entsprechend handelt es sich bei wenigstens einem der vom Client in Abhängigkeit von einer auszuführenden Aufgabe durch das Aufrufen einer vom Server angebotenen Funktionalität auf dem Server erzeugten Datenobjekte um ein als Knoten eines Knotentyps zur Repräsentation von Werten im Informationsmodell des Servers organisiertes Datenobjekt, wobei es sich bei dem repräsentierten Wert um einen technischen Parameter eines Bestandteils der Maschine und/oder Anlage handelt. Beispielsweise kann es sich um einen OPC UA Node des Typs "Variable" handeln, der den Wert des technischen Parameters der Maschine und/oder Anlage repräsentiert.

Bei dem technischen Parameter handelt es sich insbesondere um einen technischen Parameter eines elektrischen Antriebssystems. Bei dem technischen Parameter kann es sich insbesondere um einen Regelparameter, beispielsweise einen PID-Parameter, eine Temperatur, eine Drehzahl, eine mechanische Leistung, eine elektrische Leistung, eine Spannung, eine Stromstärke, eine Beschleunigung, eine Winkelbeschleunigung, eine Position, eine Winkelposition, einen Weg, eine Strecke, einen Winkel, eine Geschwindigkeit, eine Winkelgeschwindigkeit, eine Kraft und/oder ein Drehmoment handeln.

Bei der technischen Aufgabe kann sich insbesondere um eine vom Regelbetrieb der Maschine und/oder Anlage abweichende Aktion handeln. Die abweichende Aktion kann insbesondere eine Inbetriebnahme, Überprüfung und/oder Wartung der Maschine und/oder Anlage sein.

Das Verfahren zum Betreiben eines Automatisierungssystems ist insbesondere zur Lösung solcher technischer Aufgaben besonders gut geeignet, die vom Regelbetrieb der Maschine und/oder Anlage abweichen. Während es für den reinen Regelbetrieb einer Maschine und/oder Anlage grundsätzlich möglich wäre, die erforderlichen Datenobjekte quasi händisch zu identifizieren und den Server quasi "ab Werk" mit einem auf die notwendigen Datenobjekte beschränkten Adressraum auszustatten, würde ein derartiges Vorgehen immer dann an Grenzen stoßen, wenn abweichend vom Regelbetrieb andere Datenobjekte benötigt werden, um mittels eines Clients auf das Automatisierungsgerät und/oder dass wenigstens eine Feldgerät zugreifen zu können. Typische Fälle, in denen dies der Fall sein kann, sind Inbetriebnahmen, Überprüfungen und/oder Wartungen der Maschine und/oder Anlage. Hierbei kann es beispielsweise notwendig werden, Werte technischer Parameter und/oder technische Parameter der Maschine und/oder Anlage auszulesen und/oder zu schreiben, von denen im Regelbetrieb keine Kenntnis benötigt wird bzw. die im Regelbetrieb typischerweise nicht verändert werden. Dies können beispielsweise Regelparameter sein, die während einer Inbetriebnahme geschrieben werden.

Insbesondere während einer Überprüfung und/oder Wartung der Maschine und/oder technischen Anlage kann es notwendig sein, Werte technischer Parameter auszulesen, auf deren genaue Kenntnis im Regelbetrieb verzichtet werden kann und die daher im Regelbetrieb nicht ausgelesen werden, beispielsweise um die Ressourcen des Computers, auf dem der Server betrieben wird, zu schonen.

Weiterhin kann es notwendig sein, auf technische Funktionen der Maschine und/oder Anlage zuzugreifen, die im Regelbetrieb typischerweise nicht benötigt werden. Hierbei kann es sich beispielsweise um technische Funktionen der Maschine und/oder Anlage handeln, die der Kalibrierung dienen.

Das Verfahren kann insbesondere vorsehen, dass für den weiteren Betrieb der Maschine und/oder Anlage nicht mehr benötigte Datenobjekte, die zuvor durch das Aufrufen der vom Server angebotenen Funktionalität auf dem Server erzeugt worden sind, durch das Aufrufen einer vom Server angebotenen Funktionalität durch den Client und/oder durch eine vom Server automatisiert ausgeführte Funktionalität des Servers von dem Server entfernt werden.

Insbesondere im Zusammenhang mit einer technischen Aufgabe, bei der es sich um eine vom Regelbetrieb abweichende Aktion handelt, ist es sinnvoll, nicht mehr benötigte Datenobjekte aus dem Adressraum des Servers zu entfernen. Hierdurch werden die durch die Datenobjekte genutzten Ressourcen wieder freigegeben. Das Entfernen der nicht mehr benötigten Datenobjekte kann dadurch erfolgen, dass der Client eine entsprechende vom Server angebotene Funktionalität aufruft, die die Entfernung der nicht mehr benötigten Datenobjekte bewirkt.

Alternativ und/oder ergänzend kann auch eine vom Server automatisiert ausgeführten Funktionalität des Servers vorgesehen sein, die zur Entfernung der Datenobjekte von dem Server führt. Beispielsweise kann der Server dazu eingerichtet sein, die Datenobjekte, die zuvor durch den Client auf dem Server angelegt worden sind, zu entfernen, wenn die Datenverbindung zwischen Server und Client getrennt wird. Dies kann beispielsweise dann sinnvoll sein, wenn der Client nur temporär mit dem Server verbunden wird, um eine bestimmte technische Aufgabe, wie eine Inbetriebnahme, eine Überprüfung und/oder eine Wartung der Maschine und/oder technischen Anlage durchzuführen. In einem derartigen Fall kann eine entsprechende vom Server automatisiert ausgeführte Funktionalität zur Entfernung der Datenobjekte sicherstellen, dass nach der Ausführung der technischen Aufgabe keine nicht mehr benötigten Datenobjekte auf dem Server zurückbleiben und dessen Ressourcen belasten.

Das Verfahren kann insbesondere vorsehen, dass mehrere Clients gleichzeitig über den Server auf das Automatisierungsgerät und/oder dass wenigstens eine Feldgerät zugreifen. Dies ermöglicht es beispielsweise, mittels eines temporär mit dem Server verbundenen Clients eine Überprüfung, Wartung und/oder Inbetriebnahme durchzuführen, während ein anderer Client, der beispielsweise permanent mit dem Server verbunden sein kann, ebenfalls über eine Datenverbindung mit dem Server verbunden ist. Auf diese Weise ist es beispielsweise nicht notwendig, einen Client in Gestalt eines Prozessleitrechners von dem Server zu trennen, während mittels eines anderen Clients auf einem anderen Rechner eine Überprüfung, Wartung und/oder Inbetriebnahme der Maschine und/oder Anlage durchgeführt wird.

Weitere praktische Ausführungsformen und Vorteile der Erfindung sind nachfolgend im Zusammenhang mit den Zeichnungen beschrieben. Es zeigen:
- Fig. 1: eine schematische Darstellung eines Automatisierungssystems,
- Fig. 2: eine schematische Darstellung eines Automatisierungssystems nach einer alternativen Ausführungsform,
- Fig. 3: ein beispielhaftes Ablaufschema eines Verfahrens zum Betreiben des Automatisierungssystems.

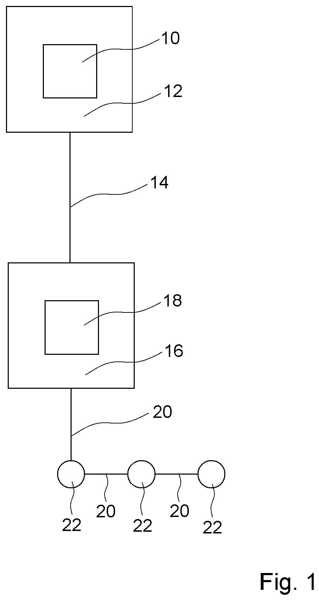

Bei dem in Figur 1 dargestellten beispielhaften Automatisierungssystem wird ein Client 10, beispielsweise ein OPC UA Client auf einem Computer 12 betrieben. Dieser Computer 12 ist über eine Datenverbindung 14 mit einem Automatisierungsgerät 16 verbunden. Bei dem Automatisierungsgerät 16 kann es sich beispielsweise um eine Steuerungseinrichtung, wie eine speicherprogrammierbare Steuerung handeln. Das Automatisierungsgerät 16 verfügt im gezeigten Beispiel über einen eingebetteten Computer, auf dem ein Server 18 betrieben wird. Bei diesem kann es sich beispielsweise um einen OPC UA Server handeln. Mittels eines Feldbusses 20 sind Feldgeräte 22 mit dem Automatisierungsgerät 16 verbunden. Das Automatisierungsgerät dient insbesondere in dem Feldbus als Master.

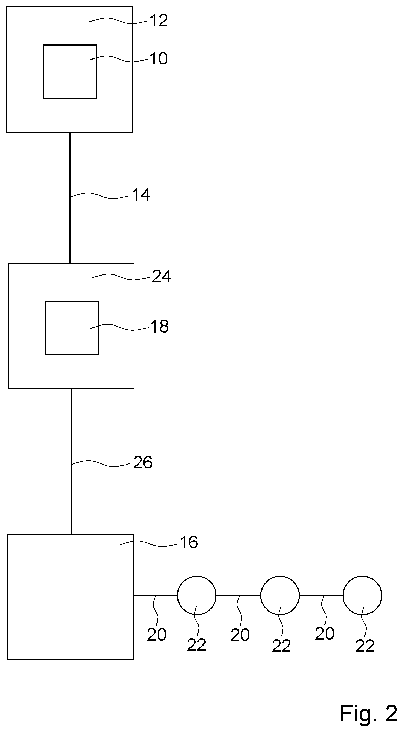

Figur 2 zeigt eine alternative Ausgestaltung des Automatisierungssystems. Das Automatisierungssystem unterscheidet sich von dem in Figur 1 dargestellten Automatisierungssystem dadurch, dass die Datenverbindung 14 den Computer 12, auf dem der Client 10 betrieben wird, mit einem Computer 24 verbindet, auf dem der Server 18 betrieben wird. Der Computer 24 wiederum ist über eine Datenverbindung 26 mit dem Automatisierungsgerät 16 verbunden.

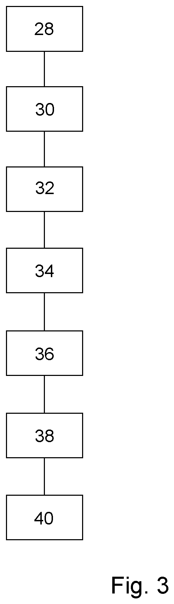

In Figur 3 ist ein schematisches Fließbild eines beispielhaften Verfahrens dargestellt. Dies kann beispielsweise vorsehen, dass zunächst im Verfahrensschritt 28, ein Computer, auf dem ein OPC UA Client betrieben wird, mit einem Automatisierungsgerät, auf dem ein OPC UA Server betrieben wird, verbunden wird.

In einem nächsten Verfahrensschritt 30 kann das Verfahren vorsehen, dass der Client 12 durch den Aufruf einer von dem Server 18 angebotenen Funktionalität einen Rückgabewert mit Informationen über Typ und/oder Adresse des Automatisierungsgerätes und/oder des wenigstens einen Feldgerät erhält.

In einem weiteren Verfahrensschritt 32 kann der Client 10 zum Typ des Automatisierungsgeräts und/oder des wenigstens einen Feldgerät passende Daten aus einer Datenquelle beziehen, die Informationen über adressierbare technische Parameter und/oder Funktionen des Automatisierungsgeräts und/oder des wenigstens einen Feldgeräts beinhalten.

Im nächsten Verfahrensschritt 34 kann das Verfahren vorsehen, dass durch den Client 10 die Ermittlung und/oder Auswahl der zu erzeugenden Datenobjekte in Abhängigkeit von der technischen Aufgabe, von den bezogenen Daten und/oder von einer Nutzeraufgabe, die beispielsweise die Auswahl der technischen Aufgabe zum Gegenstand haben kann, erfolgt.

In einem weiteren Verfahrensschritt 36 werden die zur Lösung der technischen Aufgabe notwendigen Datenobjekte auf dem Server 18 erzeugt, in dem der Client 10 eine entsprechende Funktionalität des Servers 18 aufruft, die zur Erzeugung der Datenobjekte führt.

Im Verfahrensschritt 38 erfolgt die Ausführung der technischen Aufgabe. Bei dieser kann sich beispielsweise um die Wartung, Inbetriebnahme und/oder Überprüfung einer Maschine und/oder technischen Anlage handeln. Die Ausführung der technischen Aufgabe kann insbesondere das Auslesen und/oder Schreiben technischer Parameter der Maschine und/oder Anlage durch Zugriffe des Clients beinhalten, die dem Client durch die erzeugten Datenobjekte ermöglicht werden.

Nach der Ausführung der technischen Aufgabe kann in Verfahrensschritt 40 die Entfernung nicht mehr benötigter Datenobjekte vom Server 18 erfolgen. Dies kann dadurch erfolgen, dass der Client 10 eine entsprechende vom Server 18 angebotene Funktionalität aufruft. Alternativ und/oder ergänzend kann auch eine vom Server 18 automatisiert ausgeführte Funktionalität die Entfernung der Datenobjekte bewirken, die beispielsweise durch das Trennen der Datenverbindung zwischen Client 10 und Server 18 ausgelöst werden kann.

Es versteht sich, dass das Verfahren vorsehen kann, dass zwischen den vorstehend beschriebenen Verfahrensschritten weitere Verfahrensschritte durchgeführt werden. Diese können beispielsweise zum initialisieren von Schnittstellen oder ähnlichem dienen.

Die in der vorliegenden Beschreibung, in den Zeichnungen sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein. Die Erfindung ist nicht auf die beschriebenen Ausführungsformen beschränkt. Sie kann im Rahmen der Ansprüche und unter Berücksichtigung der Kenntnisse des zuständigen Fachmanns variiert werden.

### Bezugszeichenliste

- 10: Client
- 12: Computer
- 14: Datenverbindung
- 16: Automatisierungsgerät
- 18: Server
- 20: Feldbus
- 22: Feldgerät
- 24: Computer
- 26: Datenverbindung
- 28: Verfahrensschritt
- 30: Verfahrensschritt
- 32: Verfahrensschritt
- 34: Verfahrensschritt
- 36: Verfahrensschritt
- 38: Verfahrensschritt
- 40: Verfahrensschritt

## Patentansprüche

1. Verfahren zum Betreiben eines Automatisierungssystems einer Maschine oder einer Anlage,
wobei das Automatisierungssystem ein Automatisierungsgerät (16) aufweist,
wobei von einem Client (10) über einen Server (18) auf das Automatisierungsgerät (16) zugegriffen wird,
wobei Adressinformationen für die Zugriffe von dem Server (18) in einem Adressraum in Gestalt von Datenobjekten bereitgestellt werden, die in einem Informationsmodell des Servers (18) als Knoten eines vermaschten Netzes organisiert sind,
**dadurch gekennzeichnet,**
**dass** der Client (10) in Abhängigkeit von einer auszuführenden technischen Aufgabe durch das Aufrufen einer vom Server (18) angebotenen Funktionalität, insbesondere einem Service, Datenobjekte auf dem Server (18) erzeugt, die dem Client (10) diejenigen Zugriffe auf das Automatisierungsgerät (16) und/oder wenigstens ein über einen Feldbus (20) mit dem Server (18) und/oder dem Automatisierungsgerät (16) vernetztes Feldgerät (22) ermöglichen, die zur Lösung der technischen Aufgabe notwendig sind, wobei der Client (10) in Abhängigkeit der technischen Aufgabe automatisiert diejenigen Datenobjekte ermittelt und/oder auswählt, die auf dem Server erzeugt werden müssen, um die technische Aufgabe zu lösen, wobei der Client (10) auf Daten, welche Informationen über vordefinierte technische Aufgaben enthalten, zurückgreift, wobei es sich bei den Informationen um Informationen über diejenigen technischen Parameter und/oder technischen Funktionen der Maschine und/oder Anlage handelt, auf die zur Lösung der technischen Aufgabe zugegriffen werden muss.

2. Verfahren nach Anspruch 1, **dadurch gekennzeichnet, dass** es sich bei wenigstens einem der Zugriffe, die dem Client (10) durch die erzeugten Datenobjekte auf das Automatisierungsgerät (16) und/oder das Feldgerät (22) ermöglicht werden, um das Auslesen und/oder Schreiben eines technischen Parameters eines Bestandteils der Maschine und/oder Anlage handelt und/oder den Zugriff auf eine technische Funktion eines Bestandteils der Maschine und/oder Anlage handelt.

3. Verfahren nach einem der vorigen Ansprüche, **dadurch gekennzeichnet, dass** der Client (10) durch den Aufruf einer von dem Server (18) angebotenen Funktionalität vom Server (18) einen Rückgabewert mit einer Information über den Typ und/oder die Adresse des mindestens einen Feldgeräts (22) im Feldbus (20), insbesondere Rückgabewerte mit einer Information über die Typen und/oder die Adressen sämtlicher Feldgeräte (22) im Feldbus (20), erhält.

4. Verfahren nach einem der vorigen Ansprüche, **dadurch gekennzeichnet, dass** der Client (10) zum Typ des Automatisierungsgeräts (16) und/oder des wenigstens einen Feldgeräts (22) passende Daten aus einer Datenquelle bezieht, die insbesondere Informationen über adressierbare technische Parameter und/oder Funktionen des Automatisierungsgeräts (16) und/oder des Feldgeräts (22) beinhalten.

5. Verfahren nach einem der vorigen Ansprüche, **dadurch gekennzeichnet, dass** durch den Client (10) eine Ermittlung und/oder Auswahl der zu erzeugenden Datenobjekte in Abhängigkeit von der technischen Aufgabe, von den bezogenen Daten nach Anspruch 4 und/oder von einer Nutzereingabe erfolgt.

6. Verfahren nach einem der vorigen Ansprüche, **dadurch gekennzeichnet, dass** es sich bei der vom Server (18) angebotenen Funktionalität zur Erzeugung von Datenobjekten auf dem Server (18) und/oder der vom Server (18) angebotenen Funktionalität zur Rückgabe von Rückgabewerten mit Informationen über Typen und Adressen von Feldgeräten (22) um eine Funktionalität handelt, die vom Server (18) in Gestalt eines Services und/oder eines Datenobjektes in dem Adressraum des Servers (18) bereitgestellt wird, das als Knoten des vermaschten Netzes im Informationsmodell des Servers (18), insbesondere als Knoten eines Knotentyps zur Repräsentation von Methoden, organisiert ist.

7. Verfahren nach einem der vorigen Ansprüche, **dadurch gekennzeichnet, dass** der Client (10) den Typ und/oder die Adresse des wenigstens einen Feldgeräts (22) mittels eines iterativen Verfahrens ermittelt, wobei das iterative Verfahren vorsieht, dass durch den Client (10) Datenobjekte auf dem Server erzeugt werden, die zur Ermöglichung eines Zugriffs auf ein Feldgerät wenigstens eines bestimmten Typs geeignet sind, und der Client (10) durch das testweise Aufrufen dieser Datenobjekte überprüft, ob es sich bei dem wenigstens einen Feldgerät (22) um ein Feldgerät des wenigstens einen Typs handelt, insbesondere wobei der Client (10) im Fall eines Ergebnisses der Überprüfung, das keine eindeutige Identifizierung des Typs und/oder der Adresse des Feldgeräts (22) ermöglicht, die Datenobjekte entfernt und durch andere Datenobjekte ersetzt, die zur Ermöglichung eines Zugriffs auf ein Feldgerät wenigstens eines weiteren bestimmten Typs geeignet sind und die Überprüfung wiederholt.

8. Verfahren nach einem der vorigen Ansprüche, **dadurch gekennzeichnet, dass** der Client (10) den Typ des Feldbusses (20) mittels eines iterativen Verfahrens ermittelt, wobei das iterative Verfahren vorsieht, dass durch den Client (10) Datenobjekte auf dem Server erzeugt werden, die zur Ermöglichung eines Zugriffs auf ein Automatisierungsgerät mit Anbindung an einen Feldbus wenigstens eines bestimmten Typs und/oder auf ein Feldgerät über einen Feldbus des wenigstens einen bestimmten Typs geeignet sind, und der Client (10) durch das testweise Aufrufen dieser Datenobjekte überprüft, ob es sich bei dem Feldbus (20) um einen Feldbus des wenigstens einen Typs handelt, insbesondere wobei der Client (10) im Fall eines Ergebnisses der Überprüfung, das keine eindeutige Identifizierung des Typs des Feldbusses (20) ermöglicht, die Datenobjekte entfernt und durch andere Datenobjekte ersetzt, die zur Ermöglichung eines Zugriffs auf ein Automatisierungsgerät mit Anbindung an einen Feldbus wenigstens eines weiteren bestimmten Typs und/oder auf ein Feldgerät über einen Feldbus des wenigstens einen weiteren bestimmten Typs geeignet sind und die Überprüfung wiederholt.

9. Verfahren nach einem der vorigen Ansprüche, **dadurch gekennzeichnet, dass** der Client (10) die Version einer Firmware des wenigstens einen Feldgeräts (22) mittels eines iterativen Verfahrens ermittelt, wobei das iterative Verfahren vorsieht, dass durch den Client (10) Datenobjekte auf dem Server erzeugt werden, die zur Ermöglichung eines Zugriffs auf ein Feldgerät mit einer Firmware wenigstens einer bestimmten Version geeignet sind, und der Client (10) durch das testweise Aufrufen dieser Datenobjekte überprüft, ob es sich bei der Firmware des wenigstens einen Feldgeräts (22) um eine Firmware des wenigstens einen Typs handelt, insbesondere wobei der Client (10) im Fall eines Ergebnisses der Überprüfung, das keine eindeutige Identifizierung der Version der Firmware ermöglicht, die Datenobjekte entfernt und durch andere Datenobjekte ersetzt, die zur Ermöglichung eines Zugriffs auf ein Feldgerät mit einer Firmware wenigstens einer weiteren bestimmten Version geeignet sind und die Überprüfung wiederholt.

10. Verfahren nach einem der vorigen Ansprüche, **dadurch gekennzeichnet, dass** es sich bei wenigstens einem der vom Client (10) in Abhängigkeit von einer auszuführenden technischen Aufgabe durch das Aufrufen einer vom Server (18) angebotenen Funktionalität auf dem Server (18) erzeugten Datenobjekt um ein als Knoten eines Knotentyps zur Repräsentation von Werten im Informationsmodell des Servers (18) organisiertes Datenobjekt handelt, wobei es sich bei dem repräsentierten Wert um einen Wert eines technischen Parameters, eines Bestandteils der Maschine und/oder Anlage handelt.

11. Verfahren nach einem der vorigen Ansprüche, **dadurch gekennzeichnet, dass** es sich bei dem technischen Parameter um einen technischen Parameter eines elektrischen Antriebssystems, insbesondere um einen Regelparameter, beispielsweise einen PID-Parameter, eine Temperatur, eine Drehzahl, eine mechanische Leistung, eine elektrische Leistung, eine Spannung, eine Stromstärke, eine Beschleunigung, eine Winkelbeschleunigung, eine Position, eine Winkelposition, einen Weg, eine Strecke, einen Winkel, eine Geschwindigkeit, eine Winkelgeschwindigkeit, eine Kraft und/oder ein Drehmoment handelt.

12. Verfahren nach einem der vorigen Ansprüche, **dadurch gekennzeichnet, dass** es sich bei der technischen Aufgabe um eine vom Regelbetrieb der Maschine und/oder Anlage abweichende Aktion, insbesondere eine Inbetriebnahme, Überprüfung und/oder Wartung der Maschine und/oder Anlage handelt, insbesondere wobei der Client (10) nur temporär zur Ausführung der technischen Aufgabe mit dem Server (18) vernetzt wird.

13. Verfahren nach einem der vorigen Ansprüche, **dadurch gekennzeichnet, dass** für den weiteren Betrieb der Maschine und/oder Anlage nicht mehr benötigte Datenobjekte, die zuvor durch das Aufrufen der vom Server (18) angebotenen Funktionalität auf dem Server (18) erzeugt worden sind, durch das Aufrufen einer vom Server (18) angebotenen Funktionalität durch den Client (10) und/oder durch eine vom Server (18) automatisiert ausgeführte Funktionalität des Servers (18) von dem Server (18) entfernt werden.

14. Verfahren nach einem der vorigen Ansprüche, **dadurch gekennzeichnet, dass** es sich bei dem Server (18) um einen OPC UA Server und bei den Datenobjekten um OPC UA Nodes handelt.

## Claims

1. Method for operating an automation system of a machine or an installation, wherein the automation system comprises an automation device (16), wherein the automation device (16) is accessed by a client (10) via a server (18),
wherein address information for the access operations is provided by the server (18) in an address space in the form of data objects that are organized in the form of nodes of a meshed network in an information model of the server (18),
**characterized in that**,
based on a technical task to be performed, the client (10), by calling a functionality offered by the server (18), in particular a service, generates data objects on the server (18) that allow the client (10) to perform those access operations to the automation device (16) and/or to at least one field device (22), networked with the server (18) and/or the automation device (16) via a field bus (20), that are necessary to solve the technical task, wherein the client (10), based on the technical task, in an automated manner determines and/or selects those data objects that have to be generated on the server in order to solve the technical task, wherein the client (10) makes use of data containing information about predefined technical tasks, wherein the information is information on those technical parameters and/or technical functions of the machine and/or installation which has to be accessed in order to solve the technical task.

2. Method according to claim 1, **characterized in that** at least one of the access operations to the automation device (16) and/or the field device (22), which are allowed to the client (10) by the generated data objects, is the reading and/or writing of a technical parameter of a component of the machine and/or installation and/or access to a technical function of a component of the machine and/or installation.

3. Method according to any one of the preceding claims, **characterized in that** the client (10), by calling a functionality offered by the server (18), receives a return value from the server (18) with information about the type and/or address of the at least one field device (22) in the field bus (20), in particular, return values with information about the types and/or addresses of all field devices (22) in the field bus (20).

4. Method according to any one of the preceding claims, **characterized in that** the client (10) obtains data from a data source, which data match the type of the automation device (16) and/or of the at least one field device (22), which data contain in particular information about addressable technical parameters and/or functions of the automation device (16) and/or the field device (22).

5. Method according to any one of the preceding claims, **characterized in that** the client (10) carries out a determination and/or selection of the data objects to be generated depending on the technical task, the data obtained according to claim 4, and/or a user input.

6. Method according to any one of the preceding claims, **characterized in that** the functionality offered by the server (18) for generating data objects on the server (18) and/or the functionality offered by the server (18) for returning return values with information about types and addresses of field devices (22) is a functionality which is provided by the server (18) in the form of a service and/or a data object in the address space of the server (18), which is organized as a node of the meshed network in the information model of the server (18), in particular as a node of a node type for representing methods.

7. Method according to any one of the preceding claims, **characterized in that** the client (10) determines the type and/or address of the at least one field device (22) by means of an iterative method, wherein the iterative method provides that the client (10) generates data objects on the server that are suitable for enabling access to a field device of at least one specific type, and, by calling these data objects for test purposes, the client (10) checks whether the at least one field device (22) is a field device of the at least one type, in particular wherein, if the result of the check does not allow for a clear identification of the type and/or address of the field device (22), the client (10) removes the data objects and replaces them with other data objects that are suitable for enabling access to a field device of at least one further specific type, and repeats the check.

8. Method according to any one of the preceding claims, **characterized in that** the client (10) determines the type of the field bus (20) by means of an iterative method, wherein the iterative method provides that the client (10) generates data objects on the server that are suitable for enabling access to an automation device with connection to a field bus of at least one specific type and/or to a field device via a field bus of the at least one specific type, and by calling these data objects for test purposes, the client (10) checks whether the field bus (20) is a field bus of the at least one type, in particular wherein, if the result of the check does not allow for a clear identification of the type of the field bus (20), the client (10) removes the data objects and replaces them with other data objects that are suitable for enabling access to an automation device with connection to a field bus of at least one further specific type and/or to a field device via a field bus of the at least one further specific type, and repeats the check.

9. Method according to any one of the preceding claims, **characterized in that** the client (10) determines the version of a firmware of the at least one field device (22) by means of an iterative method, wherein the iterative method provides that the client (10) generates data objects on the server that are suitable for enabling access to a field device with firmware of at least one specific version, and by calling these data objects for test purposes, the client (10) checks whether the firmware of the at least one field device (22) is a firmware of the at least one type, in particular wherein, if the result of the check does not allow for a clear identification of the version of the firmware, the client (10) removes the data objects and replaces them with other data objects that are suitable for enabling access to a field device with firmware of at least one further specific version, and repeats the check.

10. Method according to any one of the preceding claims, **characterized in that** at least one of the data objects generated on the server (18) by the client (10) depending on a technical task to be performed by calling a functionality offered by the server (18) is a data object organized as a node of a node type for representing values in the information model of the server (18), wherein the value represented is a value of a technical parameter of a component of the machine and/or installation.

11. Method according to any one of the preceding claims, **characterized in that** the technical parameter is a technical parameter of an electric drive system, in particular a control parameter, for example a **PID** parameter, a temperature, a rotation rate, a mechanical power, an electrical power, a voltage, a current strength, an acceleration, an angular acceleration, a position, an angular position, a path, a distance, an angle, a speed, an angular speed, a force and/or a torque.

12. Method according to any one of the preceding claims, **characterized in that** the technical task is an action that deviates from the normal operation of the machine and/or installation, in particular a commissioning, an inspection and/or maintenance of the machine and/or installation, in particular wherein the client (10) is only temporarily networked with the server (18) to perform the technical task.

13. Method according to any one of the preceding claims, **characterized in that** data objects no longer required for the further operation of the machine and/or installation, which have previously been generated on the server (18) by calling the functionality offered by the server (18), are removed from the server (18) by the client (10) by calling a functionality offered by the server (18) and/or by a functionality of the server (18) executed automatically by the server (18).

14. Method according to any one of the preceding claims, **characterized in that** the server (18) is an OPC UA server and the data objects are OPC UA nodes.

## Revendications

1. Procédé pour faire fonctionner un système d'automatisation d'une machine ou d'une installation,
le système d'automatisation comportant un appareil d'automatisation (16),
un client (10) pouvant accéder à l'appareil d'automatisation (16) par un serveur (18),
des informations d'adresse pour les accès par le serveur (18) étant fournies dans un espace d'adresse sous la forme d'objets de données, qui sont organisés dans un modèle d'information du serveur (18) en tant que nœuds d'un réseau maillé,
**caractérisé en ce**
**que** le client (10) génère des objets de données sur le serveur (18) en fonction d'une tâche technique à exécuter en appelant une fonctionnalité offerte par le serveur (18), en particulier un service, qui permettent au client (10) d'accéder à l'appareil d'automatisation (16) et/ou à au moins un appareil de terrain (22) interconnecté au serveur (18) et/ou à l'appareil d'automatisation (16) par un bus de terrain (20), lesquels sont nécessaires à la résolution de la tâche technique, le client (10) déterminant et/ou sélectionnant de manière automatisée, en fonction de la tâche technique, les objets de données qui précisément doivent être générés sur le serveur pour résoudre la tâche technique, le client (10) accédant à des données qui contiennent des informations sur des tâches techniques prédéfinies, les informations étant des informations sur les paramètres techniques et/ou les fonctions techniques de la machine et/ou de l'installation auxquels précisément il faut accéder pour résoudre la tâche technique.

2. Procédé selon la revendication 1, **caractérisé en ce qu'**au moins un des accès rendus possibles pour le client (10) par les objets de données générés à l'appareil d'automatisation (16) et/ou à l'appareil de terrain (22) est la lecture et/ou l'écriture d'un paramètre technique d'un composant de la machine et/ou de l'installation et/ou l'accès à une fonction technique d'un composant de la machine et/ou de l'installation.

3. Procédé selon l'une des revendications précédentes, **caractérisé en ce que** le client (10) reçoit une valeur de retour avec des informations sur le type et/ou l'adresse de l'au moins un appareil de terrain (22) dans le bus de terrain (20), en particulier des valeurs de retour avec des informations sur les types et/ou les adresses de tous les appareils de terrain (22) dans le bus de terrain (20) par l'appel par le serveur (18) d'une fonctionnalité offerte par le serveur (18).

4. Procédé selon l'une des revendications précédentes, **caractérisé en ce que** le client (10) obtient d'une source de données des données correspondant au type de l'appareil d'automatisation (16) et/ou de l'au moins un appareil de terrain (22), qui contiennent en particulier des informations sur des paramètres techniques adressables et/ou des fonctions de l'appareil d'automatisation (16) et/ou de l'appareil de terrain (22).

5. Procédé selon l'une des revendications précédentes, **caractérisé en ce que** le client (10) détermine et/ou sélectionne les objets de données à générer en fonction de la tâche technique, des données obtenues selon la revendication 4 et/ou d'une entrée d'utilisateur.

6. Procédé selon l'une des revendications précédentes, **caractérisé en ce que** la fonctionnalité offerte par le serveur (18) pour générer des objets de données sur le serveur (18) et/ou la fonctionnalité offerte par le serveur (18) pour renvoyer des valeurs de retour avec des informations sur des types et adresses des appareils de terrain (22) est une fonctionnalité qui est fournie par le serveur (18) sous la forme d'un service et/ou d'un objet de données dans l'espace d'adressage du serveur (18), qui est organisé en tant que nœud du réseau maillé dans le modèle d'information du serveur (18), en particulier en tant que nœud d'un type de nœud pour la représentation de procédés.

7. Procédé selon l'une des revendications précédentes, **caractérisé en ce que** le client (10) détermine le type et/ou l'adresse de l'au moins un appareil de terrain (22) au moyen d'un procédé itératif, le procédé itératif prévoyant que le client (10) génère des objets de données sur le serveur qui sont adaptés pour permettre un accès à un appareil de terrain d'au moins un type défini, et le client (10) vérifie en appelant ces objets de données par un test, si l'au moins un appareil de terrain (22) est un appareil de terrain de l'au moins un type, en particulier le client (10) supprimant, dans le cas d'un résultat de la vérification qui ne permet pas une identification univoque du type et/ou de l'adresse de l'appareil de terrain (22), les objets de données et les remplaçant par d'autres objets de données qui sont adaptés pour permettre un accès à un appareil de terrain d'au moins un autre type défini, et répétant la vérification.

8. Procédé selon l'une des revendications précédentes, **caractérisé en ce que** le client (10) détermine le type du bus de terrain (20) au moyen d'un procédé itératif, le procédé itératif prévoyant que le client (10) génère sur le serveur des objets de données qui sont adaptés pour permettre un accès à un appareil d'automatisation avec une connexion à un bus de terrain d'au moins un type défini et/ou à un appareil de terrain par un bus de terrain de l'au moins un type défini, et le client (10) vérifiant en appelant en mode de test lesdits objets de données si le bus de terrain (20) est un bus de terrain de l'au moins un type, en particulier le client (10) supprimant, dans le cas d'un résultat de la vérification qui ne permet pas une identification univoque du type du bus de terrain (20), les objets de données et les remplaçant par d'autres objets de données qui sont adaptés pour permettre un accès à un appareil d'automatisation avec une connexion à un bus de terrain d'au moins un autre type défini et/ou à un appareil de terrain par un bus de terrain de l'au moins un autre type défini, et répétant la vérification.

9. Procédé selon l'une des revendications précédentes, **caractérisé en ce que** le client (10) détermine la version d'un micrologiciel de l'au moins un appareil de terrain (22) au moyen d'un procédé itératif, le procédé itératif prévoyant que le client (10) génère des objets de données sur le serveur, qui sont adaptés pour permettre un accès à un appareil de terrain avec un micrologiciel d'au moins une version définie, et le client (10) vérifiant en appelant en mode de test lesdits objets de données si le micrologiciel de l'au moins un appareil de terrain (22) est un micrologiciel de l'au moins un type, en particulier le client (10) supprimant, dans le cas d'un résultat de la vérification qui ne permet pas une identification univoque de la version du micrologiciel, les objets de données et les remplaçant par d'autres objets de données qui sont adaptés pour permettre un accès à un appareil de terrain avec un micrologiciel d'au moins une autre version définie, et répétant la vérification.

10. Procédé selon l'une des revendications précédentes, **caractérisé en ce qu'**au moins un objet de données généré sur le serveur (18) par le client (10) en fonction d'une tâche technique à exécuter en appelant une fonctionnalité offerte par le serveur (18) est un objet de données organisé en tant que nœud d'un type de nœud pour représenter des valeurs dans le modèle d'information du serveur (18), la valeur représentée étant une valeur d'un paramètre technique, d'un composant de la machine et/ou de l'installation.

11. Procédé selon l'une des revendications précédentes, **caractérisé en ce que** le paramètre technique est un paramètre technique d'un système d'entraînement électrique, en particulier est un paramètre de régulation, par exemple un paramètre PID, une température, une vitesse de rotation, une puissance mécanique, une puissance électrique, une tension, une intensité de courant, une accélération, une accélération angulaire, une position, une position angulaire, une trajectoire, une distance, un angle, une vitesse, une vitesse angulaire, une force et/ou un couple de rotation.

12. Procédé selon l'une des revendications précédentes, **caractérisé en ce que** la tâche technique est une action s'écartant du fonctionnement normal de la machine et/ou de l'installation, en particulier une mise en service, une vérification et/ou une maintenance de la machine et/ou de l'installation, en particulier, le client (10) n'étant mis en réseau avec le serveur (18) que temporairement pour exécuter la tâche technique.

13. Procédé selon l'une des revendications précédentes, **caractérisé en ce que** des objets de données, qui ne sont plus nécessaires pour le fonctionnement ultérieur de la machine et/ou de l'installation et qui ont été préalablement générés sur le serveur (18) en appelant la fonctionnalité offerte par le serveur (18), sont supprimés du serveur (18) par l'appel par le client (10) d'une fonctionnalité offerte par le serveur (18) et/ou par une fonctionnalité du serveur (18) exécutée de manière automatisée par le serveur (18).

14. Procédé selon l'une des revendications précédentes, **caractérisé en ce que** le serveur (18) est un serveur OPC UA et les objets de données sont des nœuds OPC UA.
